# EUROPEAN PATENT APPLICATION

(11) **EP 1 808 252 A2**
(43) Date of publication of application: **18.07.2007**
(21) Application number: 07100069.9
(22) Date of filing: 03.01.2007
(51) Int. Cl.: B23H 7/26, B23H 7/30, B23H 9/10

(54) **Methods and apparatus for fabricating components**

(30) Priority: 05.01.2006 US 327035
(71) Applicant: General Electric Company, Schenectady, NY 12345 (US)
(72) Inventor: OTSUKA, Wayne, Madisonville, OH 42431 (US); DUNN, J. R., Hanson, KY 42413 (US); WEBB, Barry, Manitou, KY 42436 (US); GLEASON, Mark, Madisonville, KY 42431 (US); PIERCEFIELD, Keith, 42463, KY Wheatcroft (US); KEITH, Sean, Fairfield, OH 45014 (US)
(74) Representative: Illingworth-Law, William Illingworth

(57) **Abstract**

A method for fabricating a component using an electric-discharge machining (EDM) apparatus (100) includes moving a tool holder (108) of the apparatus to a position adjacent a source of a plurality of differently at least one of sized and shaped electrodes (110), gripping an electrode of the plurality of differently at least one of sized and shaped electrodes with the tool holder, moving the tool holder and the gripped electrode from adjacent the electrode source to a position adjacent a fixture (106) having the component coupled thereto, and machining the component using the electrode.

## Description

### BACKGROUND

The methods and apparatus described and/or illustrated herein relate generally to fabricating components, and more specifically to fabricating components using electric-discharge machining (EDM).

At some known turbine engine components, such as turbine nozzle and blade airfoils, use film cooling to cool surfaces that are exposed to hot gas flows during operation of the engine. More specifically, some known turbine engine airfoils are cooled by channeling cooling air through an internal cooling passage and out a plurality of cooling holes in the airfoil such that a film of cooling air flows over the airfoil. The film of cooling air acts as a barrier between the hot gas flow and the airfoil surface to facilitate cooling the airfoil. To facilitate promoting distribution of a cooling air film over the airfoil, at least some known cooling holes include a non-circular and/or divergent discharge opening, sometimes referred to as diffuser cooling holes.

At least some known diffuser cooling holes are fabricated using EDM. However, EDM may be difficult, time-consuming, and/or expensive, particularly when fabricating a plurality of diffuser cooling holes in the airfoil. For example, some known EDM processes for fabricating diffuser cooling holes use a comb-type electrode. However, comb-type electrodes may sometimes only be practical when fabricating a row of diffuser cooling holes that each have generally the same entrance angle. Some other known EDM processes for fabricating diffuser cooling holes move an electrode about a plurality of axes to fabricate the non-circular and/or divergent discharge openings. However, EDM processes that include moving an electrode about a plurality of axes to form the non-circular and/or divergent openings may be time-consuming and/or less repeatable than desired. Some other known EDM processes for fabricating diffuser cooling holes include first drilling a round through hole, and thereafter manually loading a stamped electrode into the EDM device and fabricating the non-circular and/or divergent opening using the stamped electrode.

However, because of multiple operations and manual loading of the stamped electrode, such EDM processes may be time-consuming and/or costly.

### BRIEF DESCRIPTION

In one aspect, a method is provided for fabricating a component using an electric-discharge machining (EDM) apparatus. The method includes moving a tool holder of the apparatus to a position adjacent a source of a plurality of differently at least one of sized and shaped electrodes, gripping an electrode of the plurality of differently at least one of sized and shaped electrodes with the tool holder, moving the tool holder and the gripped electrode from adjacent the electrode source to a position adjacent a fixture having the component coupled thereto, and machining the component using the electrode.

In another aspect, an electric-discharge machining apparatus includes a power source configured to emit a transient electric discharge, a source of a plurality of differently at least one of sized and shaped electrodes, a fixture configured to fixedly hold a component, and a machine head electrically coupled to the power source. The machine head includes a tool holder configured to removably hold each of the plurality of electrodes. The machine head is movable between at least one first position adjacent the electrode source and at least one second position adjacent the fixture to facilitate machining the component with at least two electrodes of the plurality of differently at least one of sized and shaped electrodes. The tool holder is positioned in the at least one first position to grip an electrode of the plurality of electrodes. The tool holder is positioned in the at least one second position to facilitate machining the component.

### DRAWINGS

Embodiments of the present invention will now be described, by way of example only, with reference to the accompanying drawings, in which:
Figure 1 is a schematic illustration of an exemplary gas turbine engine.
Figure 2 is a perspective view of an exemplary turbine rotor blade for use with the gas turbine engine shown in Figure 1.
Figure 3 is a cross-sectional view of the turbine rotor blade shown in Figure 2 taken along line 3-3 of Figure 2.
Figure 4 is a schematic illustration of an exemplary embodiment of an electric-discharge machining (EDM) apparatus that may be used to fabricate diffuser cooling holes of the turbine rotor blade shown in Figures 2 and 3.
Figure 5 is a schematic illustration of an exemplary embodiment of a tool holder for use with the EDM apparatus shown in Figure 4.
Figure 6 is a schematic illustration of the tool holder shown in Figure 5 in a clamped position.

### DETAILED DESCRIPTION

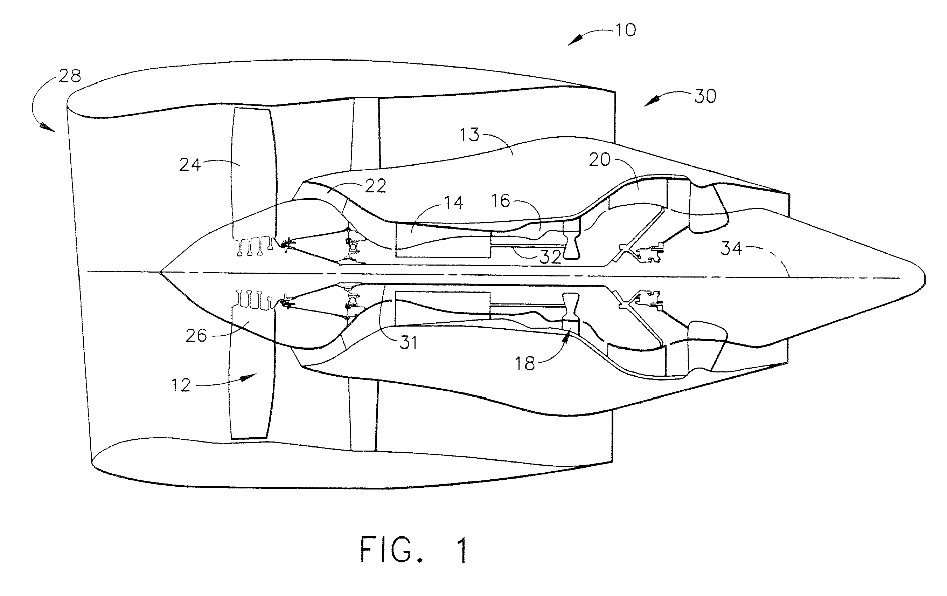

Referring to the drawings, Figure 1 is a schematic illustration of a gas turbine engine 10 that includes a fan assembly 12 and a core engine 13 including a high pressure compressor 14, a combustor 16, and a high pressure turbine 18. Engine 10 also includes a low pressure turbine 20, and a booster 22. Fan assembly 12 includes an array of fan blades 24 extending radially outward from a rotor disc 26. Engine 10 has an intake side 28 and an exhaust side 30. In one embodiment, the gas turbine engine is a GE90 available from General Electric Company, Cincinnati, Ohio. Fan assembly 12 and turbine 20 are coupled by a first rotor shaft 31, and compressor 14 and turbine 18 are coupled by a second rotor shaft 32.

During operation, air flows through fan assembly 12, along a central axis 34, and compressed air is supplied to high pressure compressor 14. The highly compressed air is delivered to combustor 16. Airflow (not shown in Figure 1) from combustor 16 drives turbines 18 and 20, and turbine 20 drives fan assembly 12 by way of shaft 31.

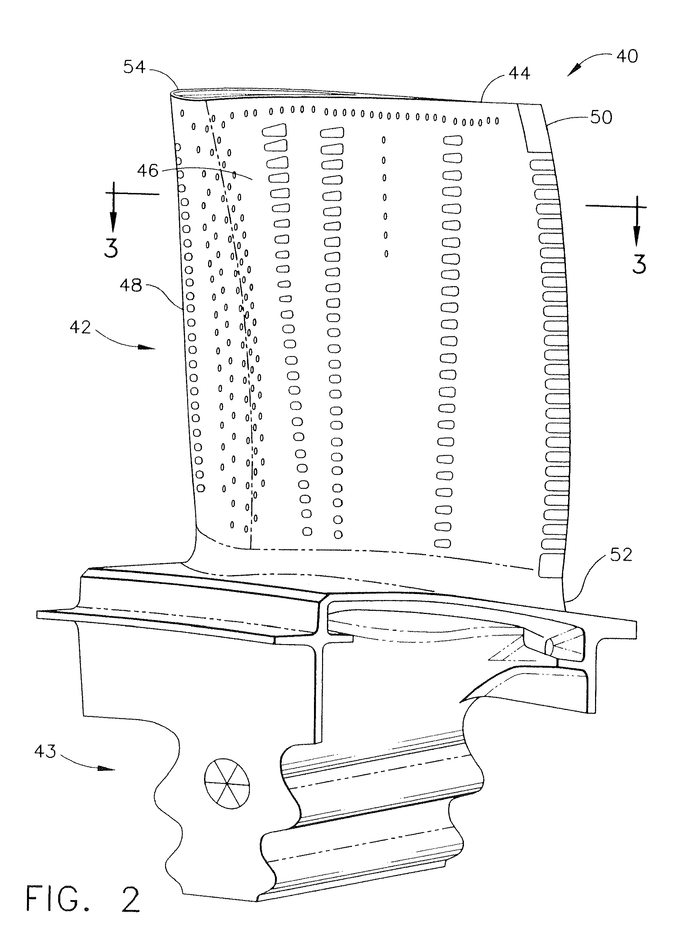

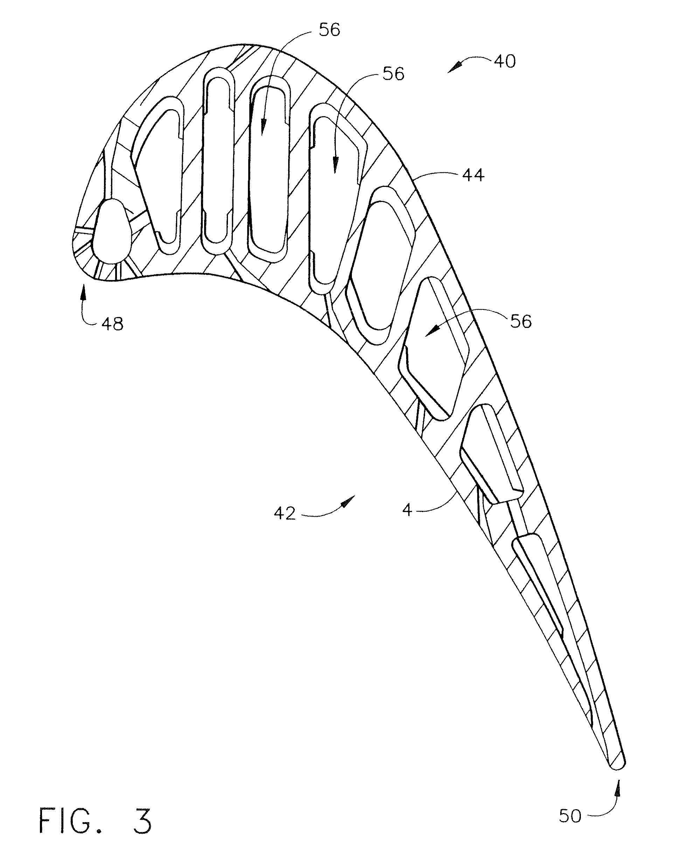

Figure 2 is a perspective view of an exemplary turbine rotor blade 40 that may be used with gas turbine engine 10 (shown in Figure 1). Figure 3 is a cross-sectional view of turbine rotor blade 40 taken along line 3-3 of Figure 2. Referring to Figures 2 and 3, in an exemplary embodiment, a plurality of turbine rotor blades 40 form a high pressure turbine rotor blade stage (not shown) of gas turbine engine 10. In the exemplary embodiment, each rotor blade 40 includes a hollow airfoil 42 and an integral dovetail 43 used for mounting airfoil 42 to a rotor disk (not shown) in a known manner.

Airfoil 42 includes a first sidewall 44 and a second sidewall 46. First sidewall 44 is convex and defines a suction side of airfoil 42, and second sidewall 46 is concave and defines a pressure side of airfoil 42. Sidewalls 44 and 46 are connected at a leading edge 48 and at an axially-spaced trailing edge 50 of airfoil 42 that is downstream from leading edge 48.

First and second sidewalls 44 and 46, respectively, extend longitudinally or radially outward to span from a blade root 52 positioned adjacent dovetail 43 to a tip plate 54 which defines a radially outer boundary of an internal cooling chamber 56. Cooling chamber 56 is defined within airfoil 42 between sidewalls 44 and 46. Internal cooling of airfoils 42 is known in the art. In the exemplary embodiment, cooling chamber 56 includes a serpentine passage 58 cooled with compressor bleed air. Cooling chamber 56 is in flow communication with a plurality of diffuser cooling holes 70 for distributing a cooling air film over airfoil 42. As can be seen from Figures 2 and 3, diffuser cooling holes 70 each include a discharge opening 72 that is non-circular and/or divergent.

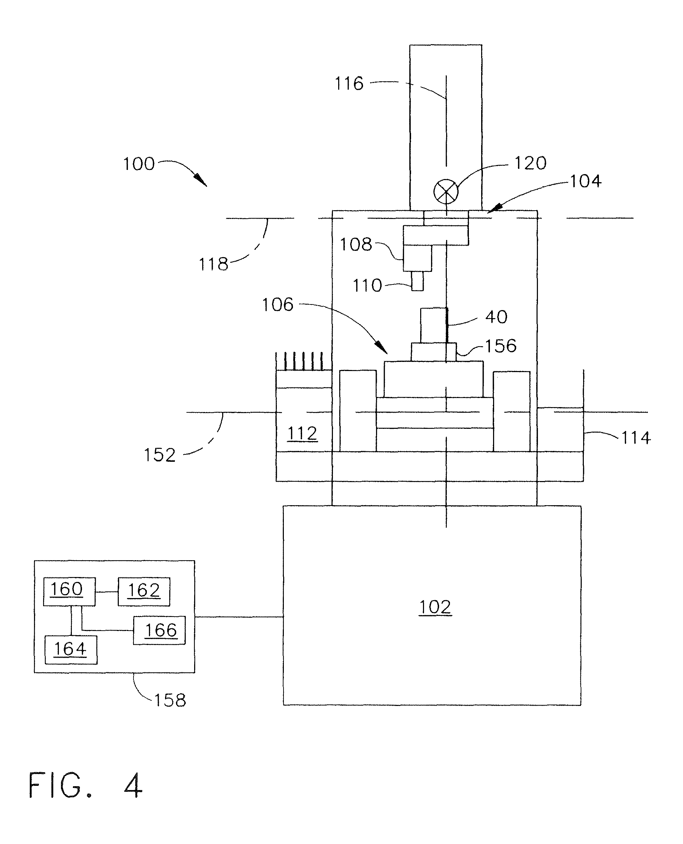

Figure 4 is a schematic illustration of an electric-discharge machining (EDM) apparatus 100 that may be used to at least partially fabricate airfoil diffuser cooling holes 70 (shown in Figures 2 and 3). Although EDM apparatus 100 may be other types of EDM machines, in the exemplary embodiment EDM apparatus 100 is a multiple axis sinker EDM machine, for example, available from Belmont Equipment & Technologies of Madison Heights, MI. EDM apparatus 100 includes a power source 102 configured to emit a transient electric discharge, a machining head 104 electrically coupled to power source 102 for receiving the transient electric discharge therefrom, and a fixture 106 for retaining a component to be machined by apparatus 100, for example turbine rotor blade 40.

Machine head 104 includes a tool holder 108 coupled thereto. Tool holder 108 is electrically coupled to a negative terminal of power source 102 for receiving electrical current from powers source 102. Tool holder 108 removably holds an electrode 110 that discharges electrical current to turbine rotor blade 40 to machine material therefrom. In some embodiments, tool holder 108 is hollow and is supplied with a coolant to facilitate cooling tool holder 108 and/or electrode 110 during machining of turbine rotor blade 40.

Machine head 104 is movable to automatically retrieve an electrode 110 using tool holder 108, machine turbine rotor blade 40 using the electrode 110, and dispose of the electrode 110 after the machining process. In the exemplary embodiment, machine head 104 is movable between an electrode storage rack 112, fixture 106, and a disposal basket 114. Although machine head 104 may be movable along and/or about any number of axis and/or in any general direction(s), in the exemplary embodiment machine head 104 is generally movable along three axes 116, 118, and 120. In the exemplary embodiment, electrode storage rack 112 includes a plurality of differently sized and/or shaped electrodes for machining differently sized and/or shaped diffuser cooling holes 70, as will be described in more detail below. In the exemplary embodiment, disposal basket 120 receives electrodes 110 released from tool holder 108 after the electrode 110 has performed a machining process. However, machine head 104 may also replace electrodes 110 that have performed a machining process back in storage rack 112. As such, in some embodiments one or more electrodes 110 is reusable after performing a machining process, although a re-usable electrode 110 may be retrieved by machine head 104, or manually, from rack 112 or basket 114. In some embodiments, one or more electrodes 110 are disposable.

Machine head 104 may be moved using any suitable structure, mechanism, and/or means that enable machine head 104 to perform the functions described herein. Examples of suitable means for moving machine head 104 include, but are not limited to electrical, pneumatic, and/or hydraulic power. Moreover, tool holder 108 may removably hold electrode 110 using any suitable structure, mechanism, and/or means that enable tool holder 108 to perform the functions described herein, for example fixedly holding an electrode 110 during a machining process. Examples of suitable means for removably holding electrode 110 include, but are not limited to, electrical, pneumatic, and/or hydraulic power.

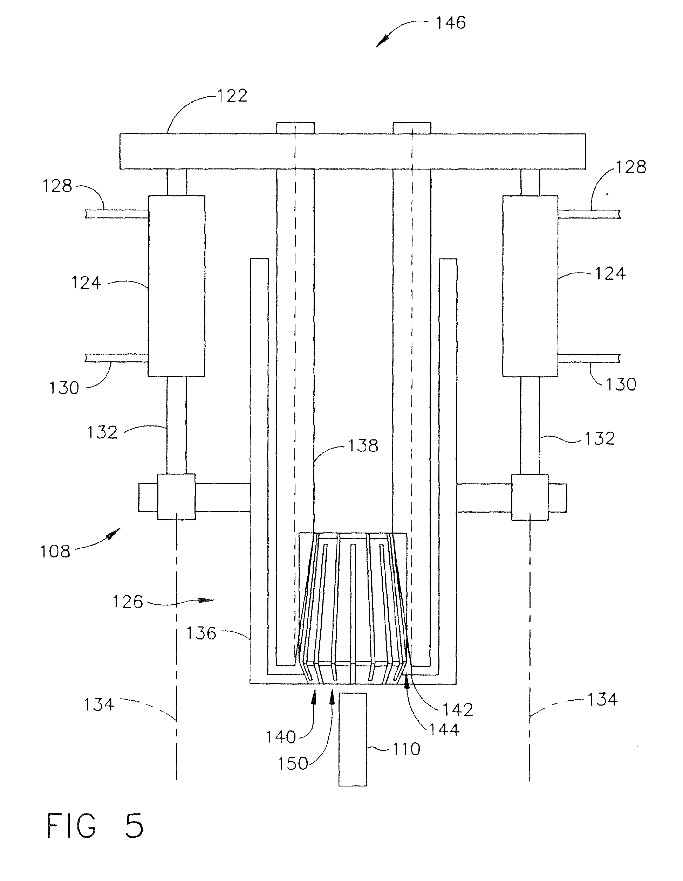

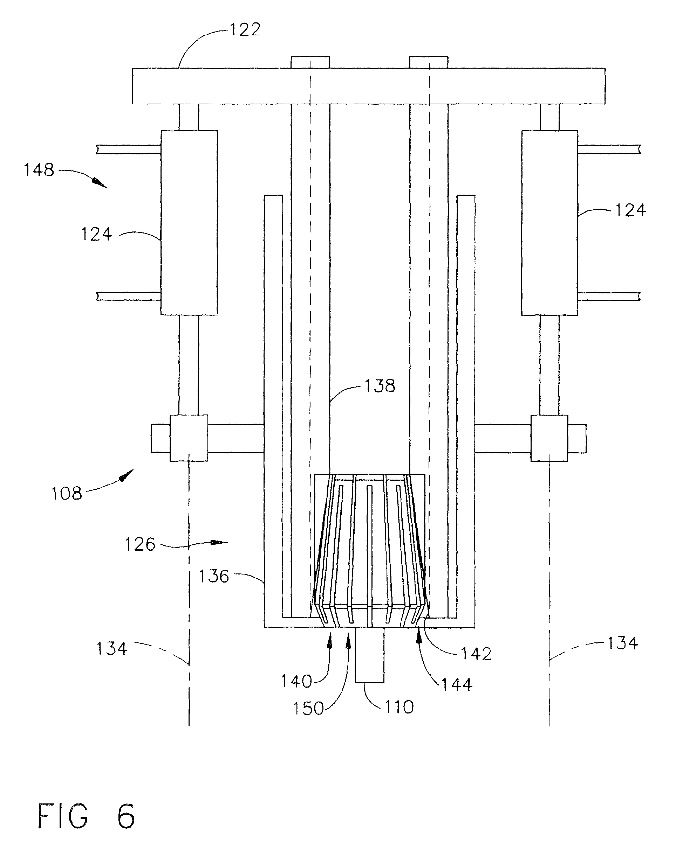

Figure 5 illustrates an exemplary embodiment of a tool holder 108 that removably holds electrode 110 using pneumatic means and exemplary structure. Tool holder 108 includes a base 122, a plurality of air cylinders 124 coupled to base 122, and a collet assembly 126 coupled to base 122. Although two air cylinders 124 are illustrated, tool holder 108 may include any number of cylinders 124. Each of air cylinders 124 includes a pair of ports 128 and 130 that are each coupled in flow communication with a source (not shown) of compressed air. Each of air cylinders 124 also includes a movable rod 132 that moves along an axis 134 of cylinders 124 when compressed air is supplied to port 128 or 130. Collet assembly 126 includes a collet holder 136 coupled to rods 132 for movement along axis 134 therewith, a collet tube 138 coupled to base 122, and an expandable collet 140 at least partially received within an opening 142 of collet tube 138 having a divergent end 144. In operation, collet 140 is expandable between a retracted, or unclamped, position 146 shown in Figure 5 wherein collet 140 does not fixedly hold an electrode 110 and a clamped position 148 shown in Figure 6 wherein collet 140 applies a radially inward force to electrode 110 to fixedly hold electrode 110. More specifically, when compressed air is supplied to port 140, air cylinder rods 132 move along axis 134 generally toward base 122 such that collet tube 138 and therefore collet 140 also move along axis 134 toward base 122. As collet 140 moves along axis 134 toward base 122, it moves further into collet tube opening 142. The divergent end 144 of collet tube opening 142 causes collet 140 to compress and thereby apply a radially inward force to an electrode 110 received within an opening 150 of collet 140 to facilitate fixedly holding electrode 110, as shown in Figure 6. Similarly, when compressed air is supplied to port 128, air cylinder rods 132 move along axis 134 generally away from base 122 such that collet tube 138 and therefore collet 140 moves along axis 134 generally away from base 122. As collet 140 moves along axis 134 away from base 122, it moves further out of collet tube opening 142. The divergent end 144 of collet tube opening 142 allows collet 140 to expand and thereby release an electrode 110, as shown in Figure 5.

Referring again to Figure 4, fixture 106 includes any suitable structure, mechanism, and/or means that enable fixture 106 to removably hold turbine rotor blade 40 such that fixture 106 fixedly holds turbine rotor blade 40 is in position relative thereto during a machining process, such as, but not limited to, manually actuated clamps, electrically, pneumatically, and/or hydraulically actuated clamps, and/or spring clamps. Fixture 106 holds turbine rotor blade 40 in a location and/or orientation relative to machine head 104 that facilitates machining at least a portion of one or more diffuser cooling holes 70 within blade 40. In the exemplary embodiment, fixture 106 is movable to further facilitate positioning turbine rotor blade 40 in a location and/or orientation relative to machine head 104 that facilitates machining at least a portion of one or more diffuser cooling holes 70. Although fixture 106 may be movable along and/or about any number of axis and/or in any general direction(s), in the exemplary embodiment fixture 106 are generally rotatable about two axes 152 and 116. Fixture 106 may be moved using any suitable structure, mechanism, and/or means that enable fixture 106 to perform the functions described herein. Examples of suitable means for moving fixture 106 include, but are not limited to electrical, pneumatic, and/or hydraulic power.

Fixture 106 includes a retainer 156 for containing any suitable dielectric fluid (not shown). When turbine rotor blade 40 is coupled to fixture 106, at least a portion of blade 40 is immersed in the dielectric fluid. Fixture 106 is electrically coupled to a positive terminal of power source 102 for receiving electrical current from powers source 102 such that when turbine rotor blade 40 is coupled to fixture 106, blade 40 is electrically coupled to a positive terminal of power source 102 for receiving electrical current from powers source 102.

Apparatus 100 includes a control system 158 for monitoring and/or controlling general operation of apparatus 100 to machine turbine blade 40. Examples of monitoring and/or controlling operation of apparatus 100 include, but are not limited to, monitoring and/or controlling movement of fixture 106 and machine head 104, monitoring and/or controlling operation of tool holder 108, and/or monitoring and/or controlling parameters of the EDM process, such as, but not limited to an amount, duration, and/or other characteristic of the transient electric discharge, a location and/or orientation of electrode 110 relative to turbine rotor blade 40, a size, shape, and/or other characteristic of the electrode 110 being used for a particular machining process, and/or a characteristic of the dielectric fluid. In the exemplary embodiment, control system 158 includes a processor 160 for executing control instructions stored in a memory 162, and a display 164 for displaying information about apparatus 100 and its operation, such as, but not limited to, EDM process parameters. Control system 158 also includes an input device 166 for inputting information into control system 158, such as, but not limited to, input of EDM process parameters.

In operation, a turbine rotor blade 40 is coupled to fixture 106. An orientation and/or location of fixture 106 is then adjusted by rotating fixture 106 about axes 152 and/or 154 to position fixture 106, and therefore blade 40, in a location and/or orientation relative to machine head 104 that facilitates machining one or more diffuser cooling holes 70 within blade 40. Machine head 104 is moved to a position adjacent the electrode storage rack 112 such that tool holder 108 is adjacent a predetermined electrode 110 having a predetermined size and/or shape for machining at least a portion of one or more predetermined sized and/or shaped diffuser holes 70. Tool holder 108 grips the electrode 110 and as machine head 104 is moved away from rack and towards turbine rotor blade 40 the electrode 110 is removed from rack 112 and fixedly held by tool holder 108. Machine head 104 is then moved towards turbine rotor blade 40 to at least partially machine one or more diffuser cooling holes 70 therein. As electrode 110 is moved toward blade 40, when electrode 110 reaches a position such that the dielectric of the gap therebetween is broken down by an erosive electrical intermittent discharge thereacross, particles of material are removed from blade 40. Further pulsating discharges continue to erode material until hole 70 is at least partially formed. The predetermined size and/or shape of electrode 110 machines the predetermined sized and/or shaped diffuser cooling hole 70, for example the predetermined non-circular and/or divergent discharge opening 72. In some embodiments, electrode 110 machines one or more entire diffuser cooling holes 70, while in some embodiments electrode 110 machines only non-circular and/or divergent discharge openings 72. Once one or more holes 70 have been at least partially machined with the predetermined electrode 110, machine head 104 in a position adjacent electrode disposal basket 114 and tool holder 108 releases electrode 110 to dispose of electrode 110 in basket 114. Machine head 104 can then be moved to electrode storage rack 112 to retrieve an electrode having a different predetermined size and/or shape for machining one or more differently sized and/or shaped holes 70 in blade 40.

The above-described methods and apparatus may facilitate cost-effective and/or reliable fabrication of components using EDM. For example, by automatically retrieving and disposing of differently sized and/or shaped electrodes for machining a plurality of differently sized and/or shaped diffuser cooling holes, the above-described methods and apparatus may facilitate reducing a time and an amount of labor as compared with some known EDM processes.

Although the methods and apparatus described and/or illustrated herein are described and/or illustrated with respect to an airfoil, and more specifically to a turbine blade for a gas turbine engine, practice of the methods and apparatus described and/or illustrated herein is not limited to turbine blades, gas turbine engine components, nor airfoils generally. Rather, the methods and apparatus described and/or illustrated herein are applicable to fabricating any feature and/or portion of any component.

Exemplary embodiments of methods and apparatus are described and/or illustrated herein in detail. The methods and apparatus are not limited to the specific embodiments described herein, but rather, components of each apparatus, as well as steps of each method, may be utilized independently and separately from other components and steps described herein. Each component, and each method step, can also be used in combination with other components and/or method steps.

When introducing elements/components/etc. of the methods and apparatus described and/or illustrated herein, the articles "a", "an", "the" and "said" are intend portioned to mean that there are one or more of the element(s)/component(s)/etc. The terms "comprising", "including" and "having" are intend portioned to be inclusive and mean that there may be additional element(s)/component(s)/etc. other than the listed element(s)/component(s)/etc.

While the invention has been described in terms of various specific embodiments, those skilled in the art will recognize that the invention can be practiced with modification within the spirit and scope of the claims.

## Claims

1. A method for fabricating a component using an electric-discharge machining (EDM) apparatus (100), said method comprising:
moving a tool holder (108) of the apparatus to a position adjacent a source of a plurality of differently at least one of sized and shaped electrodes (110);
gripping an electrode of the plurality of differently at least one of sized and shaped electrodes with the tool holder;
moving the tool holder and the gripped electrode from adjacent the electrode source to a position adjacent a fixture having the component coupled thereto; and
machining the component using the electrode.

2. A method in accordance with Claim 1 wherein moving the tool holder (108) further comprises moving the tool holder using at least one of pneumatic, electrical, and hydraulic power.

3. A method in accordance with Claim 1 wherein moving the tool holder (108) further comprises moving the tool holder at least one of along and about at least three axes (116, 118, 120).

4. An electric-discharge machining apparatus (100) comprising:
a power source (102) configured to emit a transient electric discharge;
a source of a plurality of differently at least one of sized and shaped electrodes (110);
a fixture (106) configured to fixedly hold a component; and
a machine head (104) electrically coupled to said power source, said machine head comprising a tool holder (108) configured to removably hold each of said plurality of electrodes, said machine head movable between at least one first position adjacent said electrode source and at least one second position adjacent said fixture to facilitate machining the component with at least two electrodes of said plurality of differently at least one of sized and shaped electrodes, wherein said tool holder is positioned in said at least one first position to grip an electrode of said plurality of electrodes, and wherein said tool holder is positioned in said at least one second position to facilitate machining the component.

5. Apparatus (100) in accordance with Claim 4 wherein said plurality of differently at least one of sized and shaped electrodes (110) are at least one of sized and shaped to at least partially machine a hole.

6. Apparatus (100) in accordance with Claim 4 wherein said plurality of differently at least one of sized and shaped electrodes (110) are at least one of sized and shaped to machine at least one of a non-circular and a divergent hole opening.

7. Apparatus (100) in accordance with Claim 4 further comprising a control system (158) electrically coupled to said machine head (104), said control system configured to at least one of monitor and control at least one of movement of said machine head and gripping of said plurality of electrodes (110) by said tool holder (108).

8. Apparatus (100) in accordance with Claim 4 further comprising a disposal basket (114), said machine head (104) movable to at least one third position adjacent said disposal basket, wherein said tool holder (108) is positioned in said third position to release an electrode (110) of said plurality of electrodes into said disposal basket.

9. Apparatus (100) in accordance with Claim 4 wherein said fixture (106) is configured to be movable to change at least one of a location and an orientation relative to said machine head (104).

10. Apparatus (100) in accordance with Claim 4 wherein said machine head (158) is configured to move at least one of about and along at least three axes (116, 118, 120).
